# EUROPÄISCHE PATENTSCHRIFT

(11) **EP 4 202 249 B1**
(45) Veröffentlichungstag und Bekanntmachung des Hinweises auf die Patenterteilung: **06.08.2025**
(21) Anmeldenummer: 22207187.0
(22) Anmeldetag: 14.11.2022
(51) Int. Cl.: F16D 65/12

(54) **BREMSSCHEIBE FÜR EINE REIBUNGSBREMSE EINES KRAFTFAHRZEUGS UND VERFAHREN ZUR HERSTELLUNG DERSELBEN**
BRAKE DISC FOR A FRICTION BRAKE OF A MOTOR VEHICLE AND METHOD FOR PRODUCING THE SAME
DISQUE DE FREIN POUR FREIN À FRICTION D'UN VÉHICULE AUTOMOBILE ET SON PROCÉDÉ DE FABRICATION

(30) Priorität: 22.12.2021 DE 102021214946
(43) Veröffentlichungstag der Anmeldung: 28.06.2023
(73) Patentinhaber: VOLKSWAGEN AG, 38440 Wolfsburg (DE)
(72) Erfinder: Mohwinkel, Daniel, 38108 Braunschweig (DE); Harke, Markus, 38106 Braunschweig (DE)

(56) Entgegenhaltungen:
- EP-A1- 3 971 440
- US-A1- 2013 161 132
- US-A1- 2020 408 267

## Beschreibung

Die Erfindung bezieht sich auf eine Bremsscheibe für eine Reibungsbremse eines Kraftfahrzeugs, umfassend einen Reibungsabschnitt mit mindestens einer Reibfläche und einen Befestigungsabschnitt zur fahrzeugseitigen Befestigung, wobei der Reibungsabschnitt und der Befestigungsabschnitt an einem Grundkörper aus Grauguss oder Stahl ausgebildet sind und als Reibfläche an dem Reibungsabschnitt eine Verschleißschutzschicht durch Laserauftragsschweißen aufgeschweißt ist.

Weiterhin bezieht sich die Erfindung auf ein Verfahren zur Herstellung einer Bremsscheibe für eine Reibungsbremse eines Kraftfahrzeugs, umfassend ein Bereitstellen eines Grundkörpers aus Grauguss oder Stahl, welcher sich über einen Reibungsabschnitt mit mindestens einer Reibfläche und einen Befestigungsabschnitt zur fahrzeugseitigen Befestigung erstreckt, sowie ein Aufbringen einer Verschleißschutzschicht zumindest im Bereich der Reibfläche durch Laserauftragsschweißen aufgebracht wird.

Bremsscheiben werden üblicherweise aus Grauguss hergestellt. Grauguss zeichnet sich durch eine hohe volumetrische Wärmekapazität und eine gute Thermoschockbeständigkeit aus. Zudem sind dieser als Werkstoff kostengünstig und die Fertigung von Bremsscheiben aus Grauguss gut beherrschbar. Problematisch sind jedoch die hohe Korrosionsneigung und der hohe Verschleiß des Werkstoffs im Betrieb des Fahrzeugs. Durch Korrosion kommt es zu optischen Mängeln, da sich bereits nach kürzester Zeit Rotrost ausbilden kann, welcher durch häufig eingesetzte offene Felgen direkt einsehbar ist. Die starke Korrosionsneigung des Werkstoffs kann bei sparsamer Fahrweise oder bei Elektro- und Hybridfahrzeugen mit großen Rekuperationsanteilen aufgrund der seltenen Bremsbetätigung zu einer verstärkten Oberflächenbeeinträchtigung führen, welche zu einem frühzeitigen Austausch der Bremsscheibe nötigt.

Weiterhin sind Keramik-Bremsscheiben bekannt, die zwar eine hohe Lebensdauer und exzellente Standfestigkeit aufweisen, sich aufgrund ihres sehr hohen Preises für den Großserieneinsatz jedoch bisher nicht durchsetzen konnten. Als Alternative hierzu wurde bereits vorgeschlagen, einen Grauguss-Grundkörper im Bereich der Reibflächen mit einer Verschleißschutzschicht zu versehen. Solche Lösungen erzielen ebenfalls im Vergleich zu reinen Grauguß-Bremsscheiben eine deutlich höhere Lebensdauer und Standfestigkeit, sind jedoch deutlich kostengünstiger Keramik-Bremsscheiben.

Reine Korrosionsschutzschichten wie temporäre Lack-, Zink- oder Pulverbeschichtungen sind hierzu hingegen ungeeignet, da diese auf der Reibfläche bereits bei den ersten Bremsvorgängen abgerieben werden und dort keinen dauerhaften Korrosionsschutz entfalten vermögen. Solche Korrosionsschutzschichten eignen sich vor allem zum Schutz nicht reibungsbeanspruchter Abschnitte einer Bremsscheibe sowie gegebenenfalls zur temporären Konservierung einer attraktiven Oberflächenanmutung der Reibfläche bei der Auslieferung von Neufahrzeugen.

Eine gattungsgemäße Bremsscheibe mit einer Verschleißschutzschicht sowie ein gattungsgemäßes Herstellungsverfahren hierfür sind beispielsweise aus WO 2020/234144 A1 und WO 2021/008744 A bekannt.

Bei herkömmlichen Bremsscheiben dieser Bauart ist die Schnittstelle zwischen der Verschleißschutzschicht, welche beispielsweise ein nicht-oxidisches Keramikmaterial oder eine Metalllegierung mit einer in Vergleich zum Grundkörpermaterial erhöhten Verschleißbeständigkeit sein kann, und dem Grundkörper, gegebenenfalls auch einer oder mehreren Zwischenschichten auf diesem, zur Umgebung exponiert und daher für Korrosion anfällig. Dies kann zur Delamination der Verschleißschutzschicht am Innenrand und Außenrand der Reibfläche führen. Es hat sich gezeigt, dass vor allem der Außenrand der Reibfläche betroffen ist, vermutlich weil sich dort in der Einbaulage der Bremsscheibe besonders leicht Tropfwasser sammeln kann.

Herkömmliche Korrosionsschutzschichten sind in diesem Bereich, auch aufgrund der Nähe zur Reibfläche, nicht geeignet, eine Spaltkorrosion auf Dauer vollständig unterdrücken. So bietet eine Opferbeschichtung mit einer Zinklegierung lediglich temporären Schutz, da sich das Zink als unedelste Komponente als Erstes auflöst. Lacke sind geeignet, ein Korrosionsmedium von einer auftragsgeschweißten Verschleißschutzschicht und dem Grundkörper fernzuhalten. Jedoch sind Lacke stoßempfindlich und neigen zum Beispiel bei Steinschlägen zu lokalen Schichtabplatzungen. Sobald durch eine Lackschichtabplatzung die auftragsgeschweißte Verschleißschutzschicht oder der Grundkörper freiliegen, findet ein erhöhter Korrosionsangriff statt, da die Flächenverhältnisse für die Korrosionsgeschwindigkeit sehr ungünstig sind. Es erfolgt also ein deutlich schnellerer und aggressiverer Korrosionsangriff. Daher ist auch in diesem Fall keine dauerhafte Korrosionsschutzwirkung gegeben.

Weiterhin ist aus US 2013/161132 A, entsprechend DE 10 2011 089 864 A1, bekannt eine Verschleißschutzschicht, welche durch Flammspritzen oder Lichtbogenschweißen aufgebracht ist, an dem Grundkörper über die Reibfläche hinaus in einen zur Reibfläche angewinkelten Bereich anzubringen, wo sie auch endet.

Masoumeh et al "Investigation of stand-off distance effect on structure, adhesion and hardness of copper coatings obtained by the APS technique" aus dem Journal of Theoretical and Applied Physics (2018) 12:85-91 beschreiben Probleme beim Flammspritzen und beleuchten den Einfluss des Abstands des Spritzkopfes von der zu beschichtenden Oberfläche auf die Gefügestruktur der Beschichtung. Mit größerem Abstand werden die Fehlstellen größer. Bei dünnen Schichten ergeben sich nicht ausreichend abgedeckte Bereiche.

Der Erfindung liegt die Aufgabe zugrunde, hier Abhilfe zu schaffen. Insbesondere zielt die Erfindung darauf ab, bei Bremsscheiben mit einer laserauftragsgeschweißten Verschleißschutzschicht die Lebensdauer weiter zu erhöhen.

Diese Aufgabe wird durch eine Bremsscheibe gemäß Patentanspruch 1 gelöst. Eine solche zeichnet sich insbesondere dadurch aus, dass die Verschleißschutzschicht an dem Grundkörper über die Reibfläche hinaus in einen zur Reibfläche angewinkelten Bereich fortgesetzt ist und dort endet und die Verschleißschutzschicht in dem angewinkelten Bereich des Grundkörpers deckend und zum Grundkörper spaltfrei aufgebracht ist. Obgleich die Verschleißschutzschicht in diesem Bereich endet, wird hierdurch die Korrosionsanfälligkeit deutlich reduziert, denn die Stelle, an welcher ein Korrosionsangriff nunmehr erfolgen kann, ist deutlich von der Reibfläche beabstandet. Eine etwaige Korrosion am Ende der Verschleißschutzschicht beeinträchtigt somit nicht mehr in einem funktionsrelevanten Bereich die Bindung zwischen der Verschleißschutzschicht und dem Material des Grundkörpers oder gegebenenfalls dazwischen angeordneter zusätzlicher Schichten zum Zweck der Haftvermittlung oder dergleichen. Die Lebensdauer der erfindungsgemäßen Bremsscheibe mit Verschleißschutzschicht wird auf diese Weise erheblich verlängert.

Besondere Ausführungsarten einer erfindungsgemäßen Bremsscheibe sind Gegenstand weiterer Patentansprüche.

So kann insbesondere vorgesehen sein, dass an der Reibfläche zwischen Verschleißschutzschicht und grundkörperseitigen Untergrund derselben eine Kontaktebene besteht und die sich in den angewinkelten Bereich fortsetzende Verschleißschutzschicht den Rand jener Kontaktebene abdichtet. Hierdurch wird der Weg eines auf den Bereich der Reibfläche durchschlagenden Korrosionsangriffs deutlich verlängert und dadurch die Lebensdauer der Bremsscheibe weiter erhöht.

Gemäß einer weiteren besonderen Ausführungsart geht die Reibfläche unmittelbar oder über eine Fase in einen zur Reibfläche senkrechten Umfangsabschnitt über. Dabei ist die Verschleißschutzschicht von der Reibfläche ausgehend ununterbrochen in die Fase oder in den Umfangsabschnitt fortgesetzt. Die Verschleißschutzschicht kann im Bereich der Fase oder des Umfangsabschnitts enden.

Die Schichtdicke im angewinkelten Bereich entspricht vorzugsweise in etwa der Schichtdicke an der Reibfläche, so dass beim Auftragsschweißen in beiden Bereichen mit annähernd gleichen Schweißparametern gearbeitet werden kann und ein vorzugsweise ununterbrochenes Aufbringen der Verschleißschutzschicht über die Reibfläche und den angewinkelten Bereich möglich ist. Bevorzugt beträgt die Schichtdicke der Verschleißschutzschicht im angewinkelten Bereich 80 bis 120% der Schichtdicke an der Reibfläche, jeweils gemessen senkrecht zum jeweiligen Untergrund.

Gemäß einer weiteren besonderen Ausführungsart kann die Verschleißschutzschicht im angewinkelten Bereich einen Randabschnitt aufweisen, wobei der Randabschnitt sich in der Schichtdicke verjüngend zum Rand der Verschleißschutzschicht ausläuft.

Gemäß einer weiteren besonderen Ausführungsart ist zusätzlich eine Korrosionsschutzschicht, insbesondere von der Art wie eingangs erläutert, vorgesehen, die sich über die Verschleißschutzschicht zumindest im angewinkelten Bereich sowie weiterhin über Oberflächenabschnitte der Bremsscheibe außerhalb der Verschleißschutzschicht erstreckt.. Hierdurch wird ein Korrosionsangriff auf besagte Schnittstelle herausgezögert und die Lebensdauer der Bremsscheibe weiter erhöht. Hierfür ist von Vorteil, dass der Rand der Verschleißschutzschicht deutlich von der Reibfläche beabstandet ist und durch Bremsvorgänge dadurch nicht beeinträchtigt wird. Die Korrosionsschutzschicht kann in der Fertigung auch über die Reibfläche aufgebracht werden, da dies die Aufbringung erleichtert. Im Bereich der Reibfläche wird die Korrosionsschutzschicht jedoch innerhalb weniger Bremsvorgänge abgetragen. Sie verbleibt lediglich in jenen Bereichen, welche von den Bremsbacken der Reibungsbremse nicht erfasst werden und entfaltet dort ihre Schutzwirkung gegen Korrosion.

In einer Ausführungsvariante ist die Verschleißschutzschicht unmittelbar stoffschlüssig mit dem Material des Grundkörpers verbunden ist. Durch das Laserauftragsschweißen wird, im Unterschied zu thermischen Spritzverfahren wie beispielsweise Flammspritzen, das Material des Grundkörpers etwas aufgeschmolzen, so dass sich ein besonders inniger Verbund ergibt. Eine Oberflächenvorbehandlung wie bei thermischen Spitzverfahren, bei welchen sich lediglich eine mechanische Bindung einstellt, kann beim Laserauftragsschweißen entfallen. Letzteres ermöglicht einen einschichtigen Aufbau des Verschleißschutzes unmittelbar auf dem Material des Grundkörpers.

In einer weiteren Ausführungsvariante ist für den Verschleißschutz ein zwei - oder mehrschichtiger Aufbau vorgesehen. Dabei ist die Verschleißschutzschicht auf mindestens eine Zwischenschicht aufgebracht, welche ihrerseits stoffschlüssig mit dem Material des Grundkörpers durch Laserauftragsschweißen verbunden ist.

Die oben genannte Aufgabe wird weiterhin durch ein Verfahren zur Herstellung einer Bremsscheibe für eine Reibungsbremse eines Kraftfahrzeugs gemäß Patentanspruch 7 gelöst. Das Verfahren umfasst ein Bereitstellen eines Grundkörpers aus Grauguss oder Stahl, welcher sich über einen Reibungsabschnitt mit mindestens einer Reibfläche und einen Befestigungsabschnitt zur fahrzeugseitigen Befestigung erstreckt, sowie ein Aufbringen einer Verschleißschutzschicht zumindest im Bereich der Reibfläche durch Laserauftragsschweißen mittels eines Schweißkopfes Es zeichnet sich dadurch aus, dass bei Erreichen eines Randes der Reibfläche der Schweißstrahl verkippt wird, um das Aufschweißen in einen zur Reibfläche angewinkelten Bereich der Bremsscheibe über die Reibfläche hinaus fortzusetzen, wobei der Abstand des Schweißkopfes zur jeweiligen Oberfläche gleich gehalten wird..

Hierdurch lässt sich eine Bremsscheibe der oben erläuterten Art mit hoher Lebensdauer, insbesondere hohem Widerstand gegen korrosionsbedingte Schädigung der Haftung der Verschleißschutzschicht verhältnismäßig einfach und kostengünstig herstellen.

Besondere Ausführungsarten des erfindungsgemäßen Verfahrens sind Gegenstand weiterer Patentansprüche.

So kann beispielsweise beim Aufschweißen die Bremsscheibe in der Ebene der Reibfläche rotiert werden, während der Schweißkopf radial zur Bremsscheibe relativ bewegt wird. Hierdurch kann eine spiralförmige Aufschweißraupe um die Drehachse erzeugt werden, deren Windungen sich deutlich, vorzugsweise mit 70 bis 95%, überlappen, um eine homogene Schichtdicke zu erzielen. Ein solcher Vorgang lässt sich über den Rand der Reibfläche insbesondere auch kontinuierlich fortsetzen, um eine Fase und/oder einen zur Reibfläche senkrechten Umfangsabschnitt der Bremsscheibe effizient zu erreichen.

Gemäß einer besonderen Ausführungsart des Verfahrens wird die Verschleißschutzschicht durch ein Laser-Pulver-Auftragsschweißverfahren aufgebracht. Durch einen Laserstrahl wird hierbei der Grundkörper, gegebenenfalls auch eine an diesem bereits applizierte Zwischenschicht lokal aufgeschmolzen und ein Pulvermaterial in die Schmelze eingebracht. Je nach Art des Materials des Pulvers kann auch dieses hierbei erschmolzen werden. Mittels eines Laser-Schweißkopfs lassen sich zur Reibfläche angewinkelte Bereich gut erreichen und für beide Bereiche vergleichbare Schweißparameter einhalten. Insbesondere kann der Abstand des Schweißkopfes zur jeweiligen Oberfläche gleich gehalten werden.

Prinzipiell sind jedoch auch andere Auftragsschweißverfahren möglich, wie sie beispielsweise in WO 2020/234144 A1 und WO 2021/008744 A beschrieben sind. Der diesbezügliche Inhalt aus diesen Schriften wird hiermit ausdrücklich in die vorliegende Offenbarung miteinbezogen.

Gemäß einer weiteren besonderen Ausführungsart des Verfahrens kann nach dem Aufbringen der Verschleißschutzschicht zusätzlich eine Korrosionsschutzschicht auf von der Verschleißschutzschicht nicht bedeckte Abschnitte des Grundkörpers aufgebracht werden. Hierfür können beispielsweise die eingangs erwähnten Korrosionsschutzlacke, Zink- und Pulverbeschichtungen zum Einsatz kommen.

Vorzugsweise kann dabei die Verschleißschutzschicht im angewinkelten Bereich durch die Korrosionsschutzschicht überlappt werden, um den Korrosionswiderstand gegen eine Schädigung der Haftung der Verschleißschutzschicht weiter zu erhöhen.

Als Werkstoff für die Verschleißschutzschicht kommen Materialien infrage, die gegenüber dem Werkstoff des Grundkörpers eine höhere Verschleißbeständigkeit, insbesondere sowohl eine höhere Verschleiß- als auch eine höhere Korrosionsbeständigkeit aufweisen. Der Werkstoff für die Verschleißschutzschicht kann ein nicht-oxidisches Keramikmaterial und/oder ein Metall oder eine Metalllegierung sein. In bevorzugten Ausführungen werden als nicht-oxidisches Keramikmaterial ein Carbid, ein Borid, ein Nitrid oder Mischungen hiervon eingesetzt. Vorzugsweise kommen Carbide, insbesondere Chromcarbid, Wolframcarbid und diese enthaltende Gemische zum Einsatz. Als Metall oder Metalllegierung eignen sich beispielsweise Eisen und Eisenlegierungen. Als Legierungsbestandteile können beispielsweise Nickel, Chrom und/oder Mangan eingesetzt werden.

Der Werkstoff der Verschleißschutzschicht kann als Pulver vorbereitet werden. Insbesondere kann aus dem Pulver eine Verschleißschutzschicht erzeugt werden, in der die keramischen Komponenten in Form von Partikeln vorliegen, die in eine Metalllegierungsmatrix eingebettet sind.

Nachfolgend wird die Erfindung anhand von in der Zeichnung dargestellten Ausführungsbeispielen näher erläutert. Die Zeichnung zeigt in:
- Figur 1: eine schematische Ansicht einer Bremsscheibe im Schnitt nach einem Ausführungsbeispiel der Erfindung,
- Figur 2: eine Detailansicht der Reibfläche und eines an diese anschließenden angewinkelten Bereichs des Ausführungsbeispiels aus Figur 1,
- Figur 3: eine Detailansicht der Reibfläche und eines an diese anschließenden angewinkelten Bereichs analog Figur 2 für ein abgewandeltes zweites Ausführungsbeispiel,
- Figur 4: eine Detailansicht der Reibfläche und eines an diese anschließenden angewinkelten Bereichs analog Figur 2 für ein abgewandeltes drittes Ausführungsbeispiel,
- Figur 5: eine Detailansicht der Reibfläche und eines an diese anschließenden angewinkelten Bereichs analog Figur 2 für ein abgewandeltes viertes Ausführungsbeispiel,
- Figur 6: eine Detailansicht der Reibfläche und eines an diese anschließenden angewinkelten Bereichs analog Figur 2 für ein abgewandeltes fünftes Ausführungsbeispiel,
- Figur 7: eine Detailansicht der Reibfläche und eines an diese anschließenden angewinkelten Bereichs analog Figur 2 für ein abgewandeltes sechstes Ausführungsbeispiel,
- Figur 8: eine Detailansicht der Reibfläche und eines an diese anschließenden angewinkelten Bereichs analog Figur 2 für ein abgewandeltes siebtes Ausführungsbeispiel, und in
- Figur 9: eine Darstellung zur Veranschaulichung der Herstellung der Verschleißschutzschicht.

Die vorliegende Erfindung betrifft eine verfahrenstechnische Weiterentwicklung eines Laser-Pulver-Auftragsschweißens für Verschleißschutzschicht-Reibflächen 3 an Bremsscheiben 1 mit einem Grundkörper 2 aus Grauguss oder Stahl und damit einhergehend eine neuartige Ausgestaltung solcher Bremsscheiben 1.

Die Vorteile einer auftragsgeschweißten Verschleißschutzschicht 3 als Reibfläche mit einem entsprechend ausgelegten Werkstoffsystem liegen in einer hohen Korrosionsbeständigkeit an der stark beanspruchten Reibfläche verbunden mit einer hohen Verschleißminimierung, welche zu einer hohen Lebensdauer und Standfestigkeit führt und zudem die Emission von Reibpartikeln vermindert. Geeignete Werkstoffsysteme sind, ohne Beschränkung hierauf, beispielsweise in WO 2020/234144 A1 und WO 2021/008744 A beschrieben und vorliegend einsetzbar.

Die verfahrenstechnische Weiterentwicklung ist jedoch ausdrücklich nicht an ein bestimmtes Werkstoffsystem gebunden, sondern schließt alle für Laserauftragsschweißverfahren geeigneten Verschleißschutzschicht-Werkstoffe ein, da vorliegend primär eine verfahrenstechnische Weiterentwicklung zum Vorteil des Korrosionsschutzes bezweckt wird.

Auf Erprobungsprüfständen konnte die hervorragende Bremsleistung von Verschleißschutzschicht-Reibflächen 3 in Kombination mit abgestimmten Bremsbelägen nachgewiesen werden. Außerdem konnte der Verschleiß der Bremsscheibe 1 und der Bremsbeläge im Vergleich zu einer unbeschichteten Bremsscheibe aus dem Werkstoff des Grundkörpers 2 erheblich gesenkt werden.

Üblicherweise erfolgt die Materialzufuhr beim Auftragsschweißen lediglich an der Reibfläche. Ohne weitere Maßnahmen ist der innen- und außenseitige Rand der Kontaktebene K zwischen der Verschleißschutzschicht 3 und dem Untergrund der Umgebung ausgesetzt, so dass ein Korrosionsangriff unmittelbar an der Schnittstelle der Verschleißschutzschicht 3 zu ihrem Unterbau, sei es unmittelbar das Material des Grundkörpers 2 oder eine Zwischenschicht oder ein Zwischenschichtsystem zur Haftvermittlung, erfolgen kann, so dass durch Korrosion die Verschleißschutzschicht 3 partiell abgelöst werden kann.

Dem wird vorliegend durch eine Fortsetzung der Verschleißschutzschicht 3 begegnet, welche den Rand der Kontaktebene K radial überdeckt, wodurch der Ort eines möglichen Korrosionsangriffs von besagter Kontaktebene K weg verlegt ist.

Die aufgebrachte Verschleißschutzschicht 3 kann beispielsweise spiralförmig aufgetragen werden. Die Bremsscheibe 1 wird dazu in der Ebene ihrer Reibfläche 3a in Rotation versetzt. Ein radial verfahrbarer Schweißkopf 10 mit Pulverdüse und koaxialem Laserstrahl fährt beispielsweise vom innersten Radius der Reibfläche 3a der Bremsscheibe 1 radial bis zum äußersten Radius und bringt somit spiralförmig eine Beschichtung auf, deren einzelne Windungen sich überlappen.

Dabei kann der Schweißstrahl 11 des Schweißkopfes 10 im Prinzip senkrecht zur Reibfläche ausgerichtet sein. Durch eine Neigung des Schweißkopfes 10 von bis zu +/- 45° zur Senkrechten der Reibfläche, vorzugsweise in radialer Richtung, lassen sich Rückreflektionen des Laserstrahls vom Werkstück in den optischen Strahlengang jedoch besser vermeiden.

Es empfiehlt sich, hierbei den Abstand des Schweißkopfs 10 zur Werkstückoberfläche möglichst konstant zu halten, um eine gute und vor allem gleichmäßige Haftung der Verschleißschutzschicht 3 zu erzielen.

Bei Bremsscheiben 1, welche am Rand der Reibfläche 3a eine Fase 4 im Übergang zu einem zur Reibfläche 3a senkrechten Umfangsabschnitt 5, radial innen und/oder außen aufweisen, käme es bei einer Führung des Schweißkopfs allein in einer Ebene parallel zur Reibfläche 3a im Bereich einer solchen Fase 4 zu einer deutlichen Änderung des Abstands zwischen der Düse des Schweißkopfs 10 und der Werkstückoberfläche mit unbefriedigender Qualität der Verschleißschutzschicht 3. Sowohl die Vollständigkeit der Verschleißschutzschicht 3 als auch die Haftung würden im Bereich der Fase 4 erheblich beeinträchtigt. Die Folge wäre eine nicht gänzlich deckende, unvollständige und/oder nicht-haftende Verschleißschutzschicht an den Fasenenden. In diesem Bereich könnten flüssige Medien wie Wasser mit gelösten Salzen in die Kontaktebene eintreten und eine Spaltkorrosion oder Kontaktkorrosion verursachen.

Da das Material des Grundkörpers 2 der Bremsscheibe 1 vorzugsweise Grauguss ist, treten bei Anwesenheit eines wässrigen Korrosionsmediums eine sehr schnelle Korrosionswirkung und ein rasanter Korrosionsfortschritt ein, da der Grauguss als "unedlere" Legierung im Vergleich zu dem Werkstoff der Verschleißschutzschicht 3 durch elektrochemischen Abtrag zerstört wird. Aufgrund der hiermit verbundenen Volumenzunahme durch Bildung von Eisenoxid könnte die Verschleißschutzschicht 3 hochgehebelt und damit abgelöst werden.

Erfindungsgemäß wird hingegen durch eine gut haftende Verschleißschutzschicht über die Reibfläche hinaus der Korrosionsschutz an dieser besonders sensiblen geometrischen Stelle abgesichert und eine Spaltbildung und/oder Ablösung der Verschleißschutzschicht 3 verhindert. Die Lebensdauer der Bremsscheibe 1 wird durch diese Ausgestaltung erheblich verlängert.

Um eine Spaltbildung und/oder unvollständigen Aufbringung der Verschleißschutzschicht 3 zu verhindern, sind die Anbindung der Verschleißschutzschicht 3 und die Vollständigkeit der Verschleißschutzschicht auf der Fase 4 sowie gegebenenfalls auf dem Umfangsabschnitt 5 zu jedem Zeitpunkt des Prozesses zu gewährleisten und vor allem die Anfangs- und Endbereiche des Prozesses gut anzubinden. Grundsätzlich ist dabei anzumerken, dass ein Korrosionsangriff niemals vollständig verhindert werden kann. Jedoch soll auf diese Weise der Korrosionsangriff nicht direkt an der Reibfläche 3a erfolgen, sondern von dieser deutlich beabstandet sein, beispielsweise an der Grenze von der auslaufenden Fase 4 zum außenseitigen Umfangsabschnitt 5a und/oder zum innenseitigen Umfangsabschnitt 5b der Bremsscheibe 1.

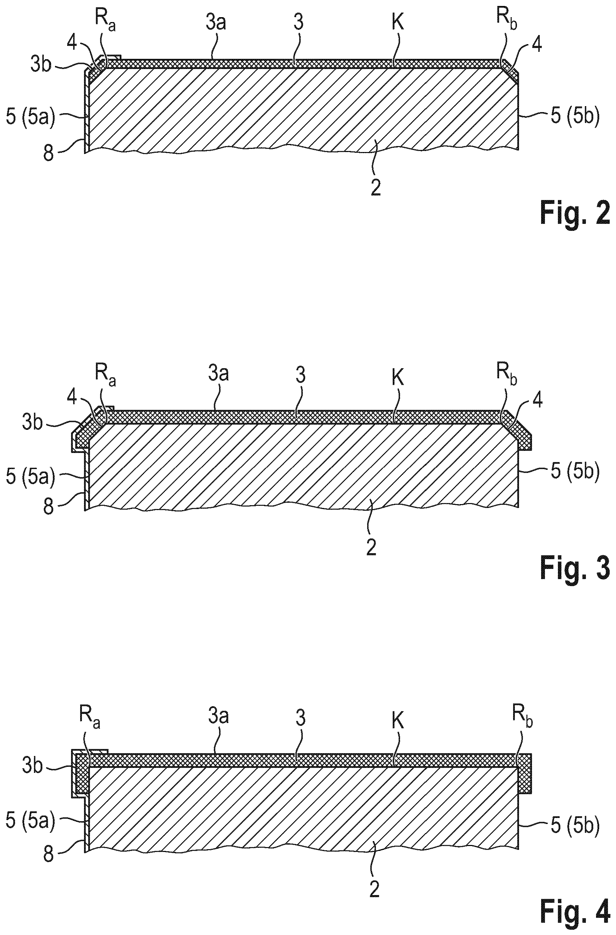

Auf diese Weise muss ein Korrosionsangriff zunächst über die Fase 4 hinweg erfolgen und kann erst wesentlich später auf den Rand Ra bzw. Rb der Kontaktebene K der Reibfläche 3a treffen. Damit kann ein erheblich verzögertes Korrosionseinwirken auf die Reibfläche erzielt 3a werden. Mit anderen Worten tritt der Korrosionsangriff nicht mehr linear zur Ausdehnung der Kontaktebene K der Reibfläche auf, sondern unter dem Anstellwinkel der Fase 4 von beispielsweise 45° und deutlich von der Kontaktebene K entfernt zum Grundkörper 2 hin versetzt, wie in den Fig. 2 bis 8 gut zu erkennen.

Die Verschleißschutzschicht 3 ist dazu über die Reibfläche 3a hinaus fortgesetzt und erstreckt sich in die Fasen 4 und/oder in die Umfangsabschnitte 5 bzw. 5a und/oder 5b. Die spaltfreie Anbindung der Verschleißschutzschicht 3 an den Fasen 4 und den Umfangsabschnitten 5 bzw. 5a und/oder 5b zum Untergrund ist dabei genauso gewährleistet wie eine vollständige Deckung ohne Fehlstellen.

Die Verschleißschutzschicht 3 ist wie gesagt vollständig und gut haftend auf den Fasen 4 und/oder den zur Reibfläche senkrechten Umfangsabschnitten 5 bzw. 5a und/oder 5b aufgebracht und kann dabei sich in ihrer Dicke verjüngend auslaufen. Eine durchgängige Beschichtung der Bremsscheibe 1 über denen gesamten Umfang wird dabei vermieden, da das Material der Verschleißschutzschicht 3 teuer und der hierfür benötigte Fertigungsaufwand hoch wären.

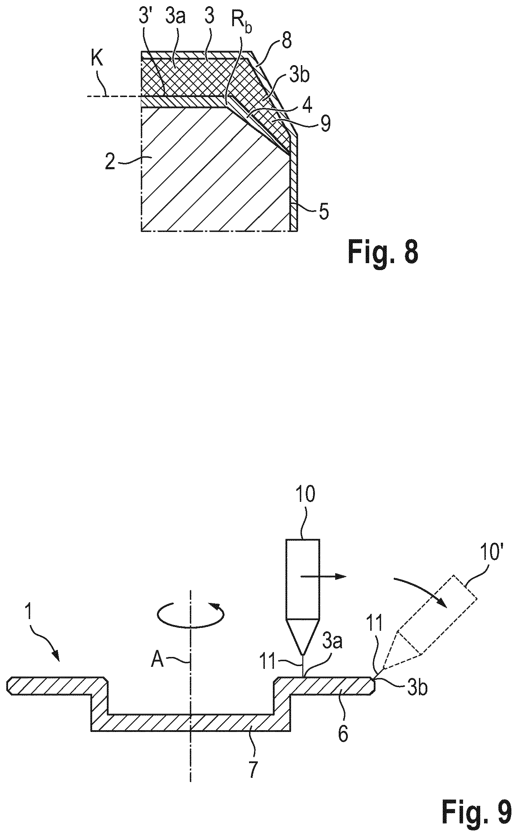

Zum Laserauftragsschweißen an einer Fase 4 oder einem Umfangsabschnitt 5 ist vorgesehen, den Schweißkopf 10 zu Beginn und/oder zum Ende des Prozesses zu verkippen, wie dies in Fig. 9 gezeigt ist. Dabei wird während des laufenden spiralförmigen Auftrags der Verschleißschutzschicht 3 die Winkellage des Schweißkopfes 10 gesteuert. Sowohl zu Beginn des Auftragsschweißprozesses als auch zu dessen Ende werden die Winkellage und die Höhenlage des Schweißkopfes 10 an die Lage der Fase 4 und des Umfangsabschnitts 5 angepasst, derart dass der Arbeitsabstand des Schweißkopfes 10 zur Werkstückoberfläche in einem relativ schmalen Toleranzband liegt, wodurch eine vollständig deckende, spaltfreie Beschichtung in diesen Bereichen erzielt wird.

Die Bremsscheibe 1 kann beispielsweise in einem linksdrehenden Prozess von innen nach außen mit einer Verschleißschutzschicht 3 beschichtet werden. Andere Möglichkeiten ergeben sich durch eine Beschichtungsstrategie, die von außen nach innen fährt. Außerdem kann die Drehrichtung der Bremsscheibe 1 von einem linksdrehenden Prozess auf einen rechtsdrehenden Prozess variiert werden und die Startpositionen von außen oder von innen gewählt werden. Da die unterschiedlichen Beschichtungsstrategien als Ergebnis eine vollständige Beschichtung auf der Reibfläche haben, spielen diese Variationen für das Endergebnis eine untergeordnete Rolle. In jeder der Beschichtungsstrategien wird allerdings der Schweißkopf 10 zu Beginn und zum Ende des Schweißprozesses verkippt, um innerhalb eines einzigen Fertigungsschrittes die vollständige Verschleißschutzschicht 3 auf die Reibfläche 3a sowie auf die Fasen 4 und/oder Umfangsabschnitte 5 jenseits der Reibfläche zu applizieren.

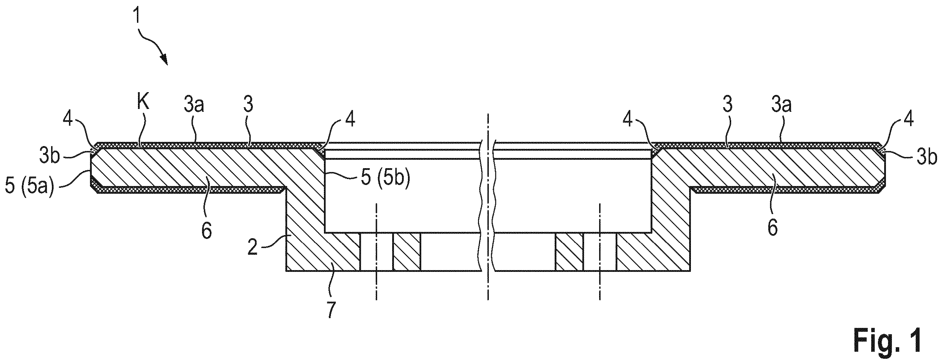

Hiermit lassen sich die in den Figuren 1 bis 8 dargestellten Ausführungsbeispiele verwirklichen, ohne dass die vorliegende Offenbarung auf diese Ausgestaltungen beschränkt wäre.

Wie Fig. 1 zeigt, weist eine erfindungsgemäße Bremsscheibe 1 für eine Reibungsbremse eines Kraftfahrzeugs einen Reibungsabschnitt 6 mit mindestens einer ebenen Reibfläche 3a, vorliegend beispielhaft zwei einander gegenüberliegende, ringförmige Reibflächen, sowie ferner einen Befestigungsabschnitt 7 zur fahrzeugseitigen Befestigung auf. Der Befestigungsabschnitt 7 ist vorliegend topfförmig ausgebildet und wird radial von dem Reibungsabschnitt 6 umgeben, kann jedoch auch anders als dargestellt ausgeführt sein.

Sowohl der Reibungsabschnitt 6 als auch der Befestigungsabschnitt 7 sind an dem oben bereits erwähnten Grundkörper 2 ausgebildet, der vorzugsweise aus Grauguss gefertigt ist, jedoch auch aus Stahl bestehen kann.

An dem Reibungsabschnitt 6 befindet sich mindestens eine Reibfläche 3a mit einer Verschleißschutzschicht 3, die durch Laserauftragsschweißen aufgebracht ist. Die Verschleißschutzschicht 3 ist vorzugsweise unmittelbar auf die Gussoberfläche aufgebracht. Die Gussoberfläche bedarf hierzu keiner besonderen Vorbereitung.

Der Reibungsabschnitt 6 kann in der Art einer Ringscheibe ausgeführt sein, an deren gegenüberliegenden Ringflächen sich jeweils eine Reibfläche 3a befindet.

Wie ebenfalls bereits erläutert, setzt sich die Verschleißschutzschicht 3 an dem Grundkörper 2 über die Reibfläche 3a hinaus in einen zur Reibfläche 3a angewinkelten Bereich 3b fort, um dort zu enden, und ist in dem angewinkelten Bereich 3b des Grundkörpers 2 deckend und zum Grundkörper 2 spaltfrei aufgebracht.

Der angewinkelte Bereich 3b schließt mit der Reibfläche 3a einen Winkel größer als 0° vorzugsweise 15 bis 95° und weiterbevorzugt von 30° bis 90° ein.

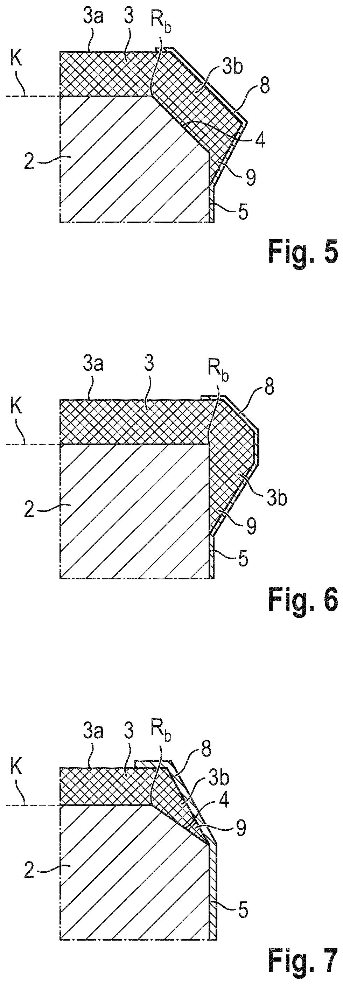

Der zur Reibfläche 3a angewinkelte Bereich 3b kann durch die oben bereits erläuterten Fasen 4 gebildet werden (vgl. Fig. 2, 3, 5 und 7). Dem angewinkelten Bereich 3b können zudem die zur Reibfläche 3a senkrechten Umfangsabschnitte 5 bzw. 5a und 5b zugerechnet werden (vgl. Fig. 3 und 5), welche an die Fasen 4 anschließen. Bei einem Entfall der Fasen 4 kann der angewinkelte Bereich 3b durch die zur Reibfläche 3a senkrechten Umfangsabschnitte 5 bzw. 5a und 5b gebildet werden (vgl. Fig. 4 und 6).

Die Verschleißschutzschicht 3 ist derart ausgeführt, dass diese im angewinkelten Bereich 3b endet. Sind gegenüberliegende Verschleißschutzschichten 3 vorgesehen, sind diese untereinander unverbunden.

An der Reibfläche 3a besteht zwischen der Verschleißschutzschicht 3 und dem grundkörperseitigen Untergrund derselben eine Kontaktebene K. In sämtlichen Ausführungsbeispielen der Fig. 1 bis 8 dichtet die sich in den angewinkelten Bereich 3b fortsetzende Verschleißschutzschicht 3 den Rand Ra, Rb jener Kontaktebene K zur Umgebung hin ab. Die zur Umgebung exponierte Kontaktstelle der Verschleißschutzschicht 3 ist somit von der Kontaktebene K zur Seite des Grundkörpers 2 hin beabstandet.

Bei dem in Fig. 2 dargestellten Ausführungsbeispiel geht die Reibfläche 3a über eine Fase 4 in einen zur Reibfläche 3a senkrechten Umfangsabschnitt 5 über. Die Verschleißschutzschicht 3 ist von der Reibfläche 3a ausgehend ununterbrochen in die Fase 4 fortgesetzt und endet radial bündig mit dem Umfangsabschnitt 5.

Die Schichtdicke der Verschleißschutzschicht 3 bleibt dabei annähernd konstant, wobei diese jeweils senkrecht zum jeweiligen Untergrund gemessen wird. Jedoch kann die Schichtdicke der Verschleißschutzschicht auch geringfügig variieren. So kann die Schichtdicke im angewinkelten Bereich 3b etwa 80 bis 120% der Schichtdicke an der Reibfläche 3a, jeweils gemessen senkrecht zum jeweiligen Untergrund, betragen.

Die Schichtdicke der Verschleißschutzschicht 3 an der Reibfläche 3a beträgt 10 µm bis 500 µm, vorzugsweise 50 µm bis 200 µm.

Fig. 3 zeigt als zweites Ausführungsbeispiel eine Abwandlung von Fig. 2 mit erhöhter Schichtdicke der Verschleißschutzschicht 3. Zudem kann diese im Unterschied zu Fig. 2 über die Fase 4 hinaus bis in den Bereich des Umfangsabschnitts 5 fortgesetzt sein, wodurch der Weg für ein Durchkorrodieren bis zur Kontaktebene K weiter vergrößert wird.

Fig. 4 zeigt als drittes Ausführungsbeispiel eine Abwandlung von Fig. 2 und 3, bei dem keine Fase 4 an den Rändern der Reibfläche 3a vorgesehen ist. In diesem Fall geht die Reibfläche 3a unmittelbar in den zur Reibfläche 3a senkrechten Umfangsabschnitt 5 über. Die Verschleißschutzschicht 3 setzt sich wiederum von der Reibfläche 3a ausgehend ununterbrochen in den Umfangsabschnitt 5 fort. Auch hier ist der Rand Ra, Rb der Kontaktebene K durch die Verschleißschutzschicht 3 im angewinkelten Bereich 3b überdeckt und abgedichtet. Die Schichtdicke der Verschleißschutzschicht 3 bleibt dabei annähernd konstant, wobei diese jeweils senkrecht zum jeweiligen Untergrund gemessen wird und wobei wiederum Abweichungen im oben bereits genannten Bereich von 80 bis 120% möglich sind.

Fig. 5 zeigt als viertes Ausführungsbeispiel eine Variation des zweiten Ausführungsbeispiels gemäß Fig. 3. Die Verschleißschutzschicht 3 weist hier im angewinkelten Bereich 3b einen Randabschnitt auf, in dem sich die Schichtdicke zum Rand der Verschleißschutzschicht 3 verjüngt. Die Verjüngung 9 betriff hier lediglich denjenigen Bereich, welcher den Umfangsabschnitt 5 überdeckt, kann jedoch in Abwandlung hiervon bereits im Bereich der Fase 4, nicht jedoch im Bereich der Reibfläche 3a, beginnen.

Fig. 6 zeigt als fünftes Ausführungsbeispiel eine Variation des dritten Ausführungsbeispiels gemäß Fig. 4. Wie in Fig. 5 weist die Verschleißschutzschicht 3 im angewinkelten Bereich 3b wiederum einen Randabschnitt auf, in dem sich die Schichtdicke zum Rand der Verschleißschutzschicht 3 verjüngt. Mangels Fase 4 läuft die Verjüngung 9 zum Rand der Verschleißschutzschicht 3 am Umfangsabschnitt 5 hin aus.

Fig. 7 zeigt als sechstes Ausführungsbeispiel eine Verjüngung 9 der Verschleißschutzschicht 3 im Bereich der Fase 4.

Ferner zeigt Fig. 7 die zusätzliche Aufbringung einer Korrosionsschutzschicht 8. Diese Korrosionsschutzschicht 8 besteht aus einem Lack, einer Zink- oder Pulverbeschichtung ohne das Erfordernis eines hohen Verschleißwiderstands für eine Reibfläche 3a und ist erheblich kostengünstiger als die Verschleißschutzschicht 3. Als Beispiel sei unter anderem eine wasser- oder lösungsmittelbasierte Zinklamellenbeschichtung genannt, welche aufgesprüht werden kann. Die Korrosionsschutzschicht 8 ist auf Oberflächenabschnitte außerhalb der Reibfläche 3a aufgebracht. Sie kann zudem die Verschleißschutzschicht 3 im angewinkelten Bereich 3b überlappen, um einen Korrosionsangriff an der Schnittstelle zwischen Verschleißschutzschicht 3 und deren Untergrund zeitlich hinauszuzögern und dadurch die Lebensdauer der Bremsscheibe 1 weiter zu erhöhen.

Eine solche Überlappung durch eine Korrosionsschutzschicht 8 kann auch bei den Ausführungsbeispielen gemäß den Fig. 1 bis 6 vorgesehen werden. In den Fig. 2 bis 4 ist dies beispielhaft jeweils für den Außenrand der Bremsscheibe 1 veranschaulicht, kann jedoch optional auch am Innenrand und etwaigen sonstigen Randstellen vorgesehen sein. Die Überlappung kann auf ausgewählte Randbereiche der Verschleißschutzschicht 3 beschränkt bleiben oder aber den gesamten Randbereich der Verschleißschutzschicht 3 erfassen.

Bei den vorstehend erläuterten Ausführungsbeispielen ist die Verschleißschutzschicht 3 unmittelbar stoffschlüssig mit dem Material des Grundkörpers 2 durch Laserauftragsschweißen verbunden. Hierbei wird das Zusatzmaterial für die Verschleißschutzschicht 3 in das Material des Grundkörpers 2 eingeschmolzen, da letzteres beim Laserauftragsscheißen etwas aufgeschmolzen wird, und haftet nicht etwa lediglich in der Art einer Schweißperle auf der Oberfläche, wie dies bei thermischen Spitzverfahren üblicherweise der Fall ist. Dies ermöglicht letztlich einen einschichtigen Aufbau des Verschleißschutzes unmittelbar auf dem Material des Grundkörpers 2 mit hinreichender Bindung.

Es ist jedoch auch möglich, für den Verschleißschutz einen Mehrschichtaufbau vorzusehen, indem wie in Fig. 8 beispielhaft gezeigt, die Verschleißschutzschicht 3 auf mindestens eine Zwischenschicht 3' durch Laserauftragsschweißen aufgebracht wird. Die Zwischenschicht 3' ist ihrerseits stoffschlüssig mit dem Material des Grundkörpers 2 durch Laserauftragsschweißen verbunden. Ein solcher Mehrschichtaufbau kann analog bei den in den Fig. 2 bis 7 gezeigten Ausführungsbeispielen zum Einsatz kommen.

Die Zwischenschicht 3' wird vorzugsweise etwas duktiler als die Verschleißschutzschicht 3 ausgeführt. Für die Zwischenschicht 3' kann beispielsweise eine Eisenbasislegierung zum Einsatz kommen. In der Verschleißschutzschicht 3 sind zusätzlich Hartpartikel, insbesondere Carbide, Borid und/oder Nitride enthalten.

Fig. 9 zeigt eine Darstellung zur Veranschaulichung eines Verfahrens zur Herstellung einer Bremsscheibe 1 mit Verschleißschutzschicht 3 wie oben erläutert.

Das Verfahren beinhaltet zunächst das Bereitstellen des Grundkörpers 2, der vorzugsweise aus Grauguss hergestellt ist, jedoch auch aus Stahl bestehen kann. Der Grundkörper 2 erstreckt sich dabei über den Reibungsabschnitt 6 mit mindestens einer Reibfläche 3a und über einen Befestigungsabschnitt 7 zur fahrzeugseitigen Befestigung. Der Reibungsabschnitt 6 und der Befestigungsabschnitt 7 sind vorzugsweise integral, d.h. einstückig miteinander ausgebildet.

Der Grundkörper 2 wird, gegebenenfalls nach Fertigung weiterer Funktionsflächen, in eine Einrichtung zum Laserauftragsschweißen verbracht, wie in Fig. 9 dargestellt. In einer solchen erfolgt dann das Aufbringen der Verschleißschutzschicht 3 durch Laserauftragsschweißen mittels eines Schweißkopfes 10, wobei der Schweißstrahl 11 des Schweißkopfes 10 über die jeweilige Werkstückoberfläche am Grundkörper 2 geführt wird.

In einer bevorzugten Ausführungsvariante wird dazu die Bremsscheibe 1 in der Ebene der Reibfläche 3a rotiert, vorliegend um die Achse A senkrecht zur Bremsscheibe 1. Zudem wird der Schweißkopf 10 radial zur Bremsscheibe 1 relativ bewegt. In Zusammenwirkung beider Bewegungen wird hierbei eine spiralförmige Schweißraupe erzeugt, deren benachbarte Windungen sich zu etwa 70 bis 95% überlappen.

Bei Erreichen eines Randes Ra, Rb der Reibfläche 3a wird der Schweißstrahl 11 des Schweißkopfes 10 verkippt, wie dies in Fig. 9 bei dem Bezugszeichen 10' angedeutet ist, um das Aufschweißen in dem zur Reibfläche 3a angewinkelten Bereich 3b der Bremsscheibe 1 über die Reibfläche 3a hinaus fortzusetzen, derart, dass der Schweißkopf 10 weiterhin mit gleichbleibendem Abstand über die Oberfläche des Werkstücks bewegt wird, hier nämlich über den angewinkelten Bereich 3b fährt.

Der Schweißstrahl 11 kann dabei im Wesentlich senkrecht zur Werkstückoberfläche ausgerichtet sein. Von einer streng senkrechten Ausrichtung des Schweißstrahls 11 kann hierbei um etwa +/- 45° abgewichen werden, ohne die Qualität der Verschleißschutzschicht 3 zu beeinträchtigen.

Der Schweißvorgang wird kontinuierlich über die Reibfläche 3a hinaus fortgesetzt, muss also nicht für den angewinkelten Bereich 3b unterbrochen werden. Der Abstand des Schweißkopfes 10 zur Werkstoffoberfläche bleibt dabei durchgehend konstant.

Sind an beiden Rändern Ra, Rb der Reibfläche 3a angewinkelte Bereiche 3b zu überfahren, wird beim Schweißen vorzugweise mit einem der angewinkelten Bereiche 3b begonnen und dann bis zum anderen angewinkelten Bereich 3b durchgehend geschweißt.

Bei Laserauftragsschweißen wird die Hartschicht 3 stoffschlüssig mit ihrem Untergrund verbunden. Dabei wird das Material des Untergrunds mittels eines Laserstrahls etwas aufgeschmolzen und gleichzeitig das Material für die Verschleißschutzschicht 3, vorzugsweise als Pulver, eingebracht.

Gegebenenfalls kann für einen Mehrschichtaufbau zunächst eine Zwischenschicht 3' durch Laserauftragsschweißen mit dem Material des Grundkörpers 2 stoffschlüssig verbunden werden. Auf diese oder mehrere solcher Zwischenschichten 3' wird anschließend die Verschleißschutzschicht 3 aufgeschweißt.

Die Verschleißschutzschicht 3 ist nach dem Auftragsschweißen prinzipiell einsatzfertig, kann jedoch gegebenenfalls noch einem Glättungsprozess unterworfen werden.

Weiterhin kann in einer Ausführungsvariante des Verfahrens nach Aufbringen der Verschleißschutzschicht 3 eine Korrosionsschutzschicht 8 auf von der Verschleißschutzschicht 3 nicht bedeckte Abschnitte des Grundkörpers 2 aufgebracht werden. Hierbei kommen üblicherweise weniger widerstandfähige und deutlich kostengünstigere Beschichtungen zum Einsatz, welche nicht geschweißt werden müssen.

Aus fertigungstechnischen Gründen wird man die Korrosionsschutzschicht 8 vorzugsweise nicht nur auf die von der Verschließschutzschicht 3 unbedeckten Abschnitte des Grundkörpers 2 aufbringen, sondern dabei auch die Verschleißschutzschicht 3 mit erfassen. Auf der Reibfläche 3a wird eine solche Korrosionsschutzschicht 8 innerhalb weniger Bremsvorgänge abgetragen, so dass im Betrieb der Bremsscheibe dieser Bereich letztlich ausgespart bleibt oder bei der Beschichtung auch ausgespart werden kann. Jedoch kann die Verschleißschutzschicht 3 im angewinkelten Bereich 3b durch die Korrosionsschutzschicht 8 überlappt werden bzw. bleiben, um einen Korrosionsangriff auf die Schnittstelle zwischen der Verschleißschutzschicht 3 und deren Untergrund hinauszuzögern und damit die Lebensdauer der Verschleißschutzschicht 3 und Bremsscheibe 1 weiter zu verbessern. Die Überlappung kann bis an die Reibfläche 3a heranreichen, d.h. bis an jene Bereiche, welche mit den Bremsbacken der Reibungsbremse letztlich in Reibeingriff gelangen.

Der Vorteil dieser Vorgehensweise ist, dass zwischen der laserauftragsgeschweißten Verschleißschutzschicht 3 und dem Grundkörper 2 kein Spalt mehr vorliegt oder entstehen kann, sondern vielmehr eine deckende und gute Anhaftung der auftragsgeschweißten Verschleißschutzschicht 3 auch im an den an die Reibfläche 3a anschließenden angewinkelten Bereich 3b, insbesondere den Fasen 4 und gegebenenfalls den Umfangsabschnitten 5 vorliegt. Hierdurch wird die Korrosionsbildung in für die Funktion besonders relevanten Bereichen der Bremsscheibe 1 verringert und einer Delamination der Verschleißschutzschicht 3 vorgebeugt. Durch eine zusätzliche Korrosionsschutzschicht 8 kann der Korrosionsangriff in Richtung der Reibfläche 3a weiter verzögert werden.

Die Erfindung wurde vorstehend anhand von Ausführungsbeispielen und weiteren Abwandlungen näher erläutert. Insbesondere können technische Einzelmerkmale, welche oben im Kontext weiterer Einzelmerkmale erläutert wurden, unabhängig von diesen sowie in Kombination mit weiteren Einzelmerkmalen verwirklicht werden, auch wenn dies nicht ausdrücklich beschrieben ist, solange dies technisch möglich ist. Die Erfindung ist daher ausdrücklich nicht auf die beschriebenen Ausführungsbeispiele und Abwandlungen beschränkt, sondern umfasst alle durch die Patentansprüche definierten Ausgestaltungen.

### Bezugszeichenliste

- 1: Bremsscheibe
- 2: Grundkörper
- 3: Verschleißschutzschicht
- 3': Zwischenschicht
- 3a: Reibfläche
- 3b: angewinkelter Bereich
- 4: Fase
- 5: Umfangsabschnitt
- 5a: äußerer Umfangsabschnitt
- 5b: innerer Umfangsabschnitt
- 6: Reibungsabschnitt
- 7: Befestigungsabschnitt
- 8: Korrosionsschutzschicht
- 9: Verjüngung
- 10: Schweißkopf
- 10': Schweißkopf, verkippt
- 11: Schweißstrahl
- A: Drehachse
- K: Kontaktebene
- Ra: (radial) äußerer Rand der Reibfläche 3a
- Rb: (radial) innerer Rand der Reibfläche 3a

## Patentansprüche

1. Bremsscheibe (1) für eine Reibungsbremse eines Kraftfahrzeugs, umfassend
einen Reibungsabschnitt (6) mit mindestens einer Reibfläche (3a) und
einen Befestigungsabschnitt (7) zur fahrzeugseitigen Befestigung, wobei der Reibungsabschnitt (6) und der Befestigungsabschnitt (7) an einem Grundkörper (2) aus Grauguss oder Stahl ausgebildet sind und als Reibfläche (3a) an dem Reibungsabschnitt (6) eine Verschleißschutzschicht (3) durch Laserauftragsschweißen aufgeschweißt ist, **dadurch gekennzeichnet, dass**
sich die Verschleißschutzschicht (3) an dem Grundkörper (3) über die Reibfläche (3a) hinaus in einen zur Reibfläche (3a) angewinkelten Bereich (3b) fortsetzt und dort endet und
die Verschleißschutzschicht (3) in dem angewinkelten Bereich (3b) des Grundkörpers (2) deckend und zum Grundkörper (2) spaltfrei aufgebracht ist.

2. Bremsscheibe (1) nach Anspruch 1, **dadurch gekennzeichnet, dass** an der Reibfläche (3a) zwischen der Verschleißschutzschicht (3) und dem grundkörperseitigen Untergrund derselben eine Kontaktebene (K) besteht und die sich in den angewinkelten Bereich (3b) fortsetzende Verschleißschutzschicht (3) den Rand jener Kontaktebene (K) abdichtet.

3. Bremsscheibe (1) nach Anspruch 1 oder 2, **dadurch gekennzeichnet, dass** der angewinkelte Bereich (3b) durch eine Fase (4) und/oder einen zur Reibfläche (3a) senkrechten Umfangsabschnitt (5, 5a, 5b) definiert ist, die Reibfläche (3a) unmittelbar oder über die Fase (4) in den zur Reibfläche (3a) senkrechten Umfangsabschnitt (5, 5a, 5b) übergeht und die Verschleißschutzschicht (3) von der Reibfläche (3a) ausgehend ununterbrochen in die Fase (4) oder in den Umfangsabschnitt (5, 5a, 5b) fortgesetzt ist.

4. Bremsscheibe (1) nach einem der Ansprüche 1 bis 3, **dadurch gekennzeichnet, dass** die Schichtdicke der Verschleißschutzschicht (3) im angewinkelten Bereich 80 bis 120% der Schichtdicke an der Reibfläche (3a), jeweils gemessen senkrecht zum jeweiligen Untergrund, beträgt.

5. Bremsscheibe (1) nach einem der Ansprüche 1 bis 4, **dadurch gekennzeichnet, dass** die Verschleißschutzschicht (3) im angewinkelten Bereich (3b) einen Randabschnitt aufweist, wobei der Randabschnitt sich in der Schichtdicke verjüngend (9) zum Rand der Verschleißschutzschicht (3) ausläuft.

6. Bremsscheibe (1) nach einem der Ansprüche 1 bis 5, **dadurch gekennzeichnet, dass** eine Korrosionsschutzschicht (8) vorgesehen ist, die sich über die Verschleißschutzschicht (3) zumindest im angewinkelten Bereich (3b) sowie weiterhin über Oberflächenabschnitte der Bremsscheibe außerhalb der Verschleißschutzschicht (3) erstreckt.

7. Bremsscheibe (1) nach einem der Ansprüche 1 bis 6, **dadurch gekennzeichnet, dass** die Verschleißschutzschicht (3) unmittelbar stoffschlüssig mit dem Material des Grundkörpers (2) verbunden ist, oder dass die Verschleißschutzschicht (3) auf eine Zwischenschicht (3') aufgebracht ist, welche ihrerseits stoffschlüssig mit dem Material des Grundkörpers (2) durch Laserauftragsschweißen verbunden ist.

8. Verfahren zur Herstellung einer Bremsscheibe (1) für eine Reibungsbremse eines Kraftfahrzeugs, umfassend:
- Bereitstellen eines Grundkörpers (2) aus Grauguss oder Stahl, welcher sich über einen Reibungsabschnitt (6) mit mindestens einer Reibfläche (3a) und einen Befestigungsabschnitt (7) zur fahrzeugseitigen Befestigung erstreckt,
- Aufbringen einer Verschleißschutzschicht (3) zumindest im Bereich der Reibfläche (3a) des Reibungsabschnitts (6) durch Laserauftragsschweißen mittels eines Schweißkopfes (10),
**dadurch gekennzeichnet, dass**
bei Erreichen eines Randes (Ra, Rb) der Reibfläche (3a) das Laseraufschweißen in einen zur Reibfläche (3a) angewinkelten Bereich (3b) der Bremsscheibe (1) über die Reibfläche (3a) hinaus fortgesetzt wird, wobei der Abstand des Schweißkopfes (10) zur jeweiligen Oberfläche konstant gehalten wird.

9. Verfahren nach Anspruch 8, **dadurch gekennzeichnet, dass** beim Aufschweißen die Bremsscheibe (1) in der Ebene der Reibfläche (3a) rotiert wird und der Schweißkopf (10) radial zur Bremsscheibe (1) relativ bewegt wird und bei Erreichen des Randes (Ra, Rb) der Reibfläche (3a) der Schweißkopf (10) verkippt wird.

10. Verfahren nach Anspruch 8 oder 9, **dadurch gekennzeichnet, dass** nach Aufbringen der Verschleißschutzschicht (3) eine Korrosionsschutzschicht (8) auf von der Verschleißschutzschicht (3) nicht bedeckte Abschnitte des Grundkörpers aufgebracht wird, wobei, vorzugsweise, die Verschleißschutzschicht (3) im angewinkelten Bereich (3b) durch die Korrosionsschutzschicht (8) überlappt wird.

## Claims

1. Brake disc (1) for a friction brake of a motor vehicle, comprising a friction section (6) with at least one friction surface (3a) and a mounting section (7) for vehicle-side attachment, wherein the friction section (6) and the mounting section (7) are formed on a base body (2) made of cast iron or steel, and a wear protection layer (3) is welded onto the friction surface (3a) of the friction section (6) by laser cladding, **characterized in that** the wear protection layer (3) extends on the base body (2) beyond the friction surface (3a) into an area (3b) angled relative to the friction surface (3a) and terminates there, and the wear protection layer (3) is applied in the angled area (3b) of the base body (2) in a covering and gap-free manner.

2. Brake disc (1) according to claim 1, **characterized in that** a contact plane (K) exists at the friction surface (3a) between the wear protection layer (3) and the base body-side substrate thereof, and the wear protection layer (3) extending into the angled area (3b) seals the edge of said contact plane (K).

3. Brake disc (1) according to claim 1 or 2, **characterized in that** the angled area (3b) is defined by a chamfer (4) and/or a circumferential section (5, 5a, 5b) perpendicular to the friction surface (3a), wherein the friction surface (3a) transitions directly or via the chamfer (4) into the circumferential section (5, 5a, 5b) perpendicular to the friction surface (3a), and the wear protection layer (3) is continuously extended from the friction surface (3a) into the chamfer (4) or the circumferential section (5, 5a, 5b).

4. Brake disc (1) according to any of claims 1 to 3, **characterized in that** the layer thickness of the wear protection layer (3) in the angled area amounts to 80 to 120% of the layer thickness at the friction surface (3a), each measured perpendicular to the respective substrate.

5. Brake disc (1) according to any of claims 1 to 4, **characterized in that** the wear protection layer (3) in the angled area (3b) comprises an edge section, wherein the edge section tapers (9) in layer thickness towards the edge of the wear protection layer (3).

6. Brake disc (1) according to any of claims 1 to 5, **characterized in that** a corrosion protection layer (8) is provided, which extends over the wear protection layer (3) at least in the angled area (3b) and further over surface sections of the brake disc outside the wear protection layer (3).

7. Brake disc (1) according to any of claims 1 to 6, **characterized in that** the wear protection layer (3) is directly materially bonded to the material of the base body (2), or that the wear protection layer (3) is applied onto an intermediate layer (3'), which in turn is materially bonded to the material of the base body (2) by laser cladding.

8. Method for producing a brake disc (1) for a friction brake of a motor vehicle, comprising:
• Providing a base body (2) made of cast iron or steel, which extends over a friction section (6) with at least one friction surface (3a) and a mounting section (7) for vehicle-side attachment,
• Applying a wear protection layer (3) at least in the area of the friction surface (3a) of the friction section (6) by laser cladding using a welding head (10), **characterized in that** upon reaching an edge (Ra, Rb) of the friction surface (3a), the laser cladding is continued beyond the friction surface (3a) into an area (3b) of the brake disc (1) angled relative to the friction surface (3a), wherein the distance of the welding head (10) to the respective surface is kept constant.

9. Method according to claim 8, **characterized in that** during cladding, the brake disc (1) is rotated in the plane of the friction surface (3a) and the welding head (10) is moved radially relative to the brake disc (1), and upon reaching the edge (Ra, Rb) of the friction surface (3a), the welding head (10) is tilted.

10. Method according to claim 8 or 9, **characterized in that** after applying the wear protection layer (3), a corrosion protection layer (8) is applied to sections of the base body not covered by the wear protection layer (3), wherein preferably the wear protection layer (3) in the angled area (3b) is overlapped by the corrosion protection layer (8).

## Revendications

1. Disque de frein (1) pour un frein à friction d'un véhicule automobile, comprenant une section de friction (6) avec au moins une surface de friction (3a) et une section de fixation (7) destinée à la fixation côté véhicule, la section de friction (6) et la section de fixation (7) étant formées sur un corps de base (2) en fonte grise ou en acier, et une couche de protection contre l'usure (3) étant appliquée sur la surface de friction (3a) de la section de friction (6) par rechargement laser, **caractérisé en ce que** la couche de protection contre l'usure (3) s'étend sur le corps de base (2) au-delà de la surface de friction (3a) dans une zone (3b) inclinée par rapport à la surface de friction (3a) et y prend fin, et **en ce que** la couche de protection contre l'usure (3) est appliquée dans la zone inclinée (3b) du corps de base (2) de manière couvrante et sans interstice.

2. Disque de frein (1) selon la revendication 1, **caractérisé en ce qu'**un plan de contact (K) est présent sur la surface de friction (3a) entre la couche de protection contre l'usure (3) et le substrat du corps de base, et **en ce que** la couche de protection contre l'usure (3) s'étendant dans la zone inclinée (3b) scelle le bord dudit plan de contact (K).

3. Disque de frein (1) selon la revendication 1 ou 2, **caractérisé en ce que** la zone inclinée (3b) est définie par un chanfrein (4) et/ou une section périphérique (5, 5a, 5b) perpendiculaire à la surface de friction (3a), la surface de friction (3a) passant directement ou via le chanfrein (4) dans la section périphérique (5, 5a, 5b) perpendiculaire à la surface de friction (3a), et **en ce que** la couche de protection contre l'usure (3) est prolongée sans interruption depuis la surface de friction (3a) dans le chanfrein (4) ou dans la section périphérique (5, 5a, 5b).

4. Disque de frein (1) selon l'une des revendications 1 à 3, **caractérisé en ce que** l'épaisseur de la couche de protection contre l'usure (3) dans la zone inclinée est de 80 à 120 % de l'épaisseur de la couche sur la surface de friction (3a), mesurée perpendiculairement au substrat respectif.

5. Disque de frein (1) selon l'une des revendications 1 à 4, **caractérisé en ce que** la couche de protection contre l'usure (3) dans la zone inclinée (3b) présente une section de bord, ladite section de bord s'amincissant (9) en direction du bord de la couche de protection contre l'usure (3).

6. Disque de frein (1) selon l'une des revendications 1 à 5, **caractérisé en ce qu'**une couche de protection contre la corrosion (8) est prévue, laquelle s'étend au moins sur la couche de protection contre l'usure (3) dans la zone inclinée (3b) ainsi que sur des sections de surface du disque de frein situées en dehors de la couche de protection contre l'usure (3).

7. Disque de frein (1) selon l'une des revendications 1 à 6, **caractérisé en ce que** la couche de protection contre l'usure (3) est liée de manière homogène au matériau du corps de base (2), ou **en ce que** la couche de protection contre l'usure (3) est appliquée sur une couche intermédiaire (3') qui est elle-même liée de manière homogène au matériau du corps de base (2) par rechargement laser.

8. Procédé de fabrication d'un disque de frein (1) pour un frein à friction d'un véhicule automobile, comprenant :
• la mise à disposition d'un corps de base (2) en fonte grise ou en acier, qui s'étend sur une section de friction (6) avec au moins une surface de friction (3a) et une section de fixation (7) destinée à la fixation côté véhicule,
• l'application d'une couche de protection contre l'usure (3) au moins dans la zone de la surface de friction (3a) de la section de friction (6) par rechargement laser à l'aide d'une tête de soudage (10), **caractérisé en ce qu'**à l'atteinte d'un bord (Ra, Rb) de la surface de friction (3a), le rechargement laser est poursuivi au-delà de la surface de friction (3a) dans une zone (3b) du disque de frein (1) inclinée par rapport à la surface de friction (3a), la distance entre la tête de soudage (10) et la surface respective étant maintenue constante.

9. Procédé selon la revendication 8, **caractérisé en ce que**, lors du rechargement, le disque de frein (1) est mis en rotation dans le plan de la surface de friction (3a) et la tête de soudage (10) est déplacée radialement par rapport au disque de frein (1), et **en ce qu'**à l'atteinte du bord (Ra, Rb) de la surface de friction (3a), la tête de soudage (10) est inclinée.

10. Procédé selon la revendication 8 ou 9, **caractérisé en ce qu'**après l'application de la couche de protection contre l'usure (3), une couche de protection contre la corrosion (8) est appliquée sur les sections du corps de base non recouvertes par la couche de protection contre l'usure (3), la couche de protection contre l'usure (3) étant de préférence recouverte dans la zone inclinée (3b) par la couche de protection contre la corrosion (8).
